# FASCICULE DE BREVET EUROPEEN

(11) **EP 1 111 584 B1**
(45) Date de publication et mention de la délivrance du brevet: **15.10.2003**
(21) Numéro de dépôt: 00450019.5
(22) Date de dépôt: 21.12.2000
(51) Int. Cl.: G10K 11/168

(54) **Procédé de réalisation d'une couche acoustiquement résistive pour paroi acoustique**
Verfahren zur Erzeugung eines schallschluckenden Belages für Schallschutzwände
Manufacturing process of an acoustically resistive layer for acoustic panel

(30) Priorité: 24.12.1999 FR 9916449
(43) Date de publication de la demande: 27.06.2001
(73) Titulaire: AIRBUS FRANCE, 31060 Toulouse (FR)
(72) Inventeur: Andre, Robert, 31120 La Croix-Falgarde (FR); Porte, Alain, 31770 Colomiers (FR); Rambaud, Eric, 44840 Les Sorinieres (FR)
(74) Mandataire: Thébault, Jean-Louis

(56) Documents cités:
- EP-B- 0 352 993
- FR-A- 2 735 064
- FR-A- 2 771 331
- GB-A- 2 122 540
- US-A- 4 671 841
- US-A- 5 151 311

## Description

La présente invention concerne un procédé de réalisation d'une couche résistive pour paroi acoustique notamment pour la fabrication de nacelles de réacteurs d'aéronef et plus généralement de tout conduit nécessitant des parois insonorisantes.

On connaît des couches résistives plus ou moins perméables à l'air qui permettent des atténuations très significatives des ondes sonores. Ces couches sont combinées à des structures alvéolaires de type nid d'abeilles pour constituer des résonateurs quart d'ondes rapportés sur un réflecteur total.

Les couches résistives ont pour rôle de dissiper l'énergie acoustique en la transformant en chaleur grâce aux effets visqueux engendrés lors de la circulation des ondes. Elles comprennent généralement au moins un tissu d'amortissement acoustique et un matériau de renfort.

De telles couches ainsi que les panneaux élaborés à partir de ces couches sont décrits dans la demande de brevet français N° 2 767 411 au nom du présent titulaire. Dans cette demande, il est prévu de renforcer la résistance mécanique d'un tissu métallique ou composite d'amortissement acoustique par apport d'une couche de matériau de renfort structural, liée à cette couche résistive. Dans cette demande, les fils de renfort sont à taux de surface ouverte ajustable et solidarisés audit tissu.

Le tissu acoustique est essentiellement choisi en fonction de ses fortes capacités à rendre le traitement acoustique linéaire et à piéger les ondes acoustiques dans les cellules de Helmholtz formées par la structure alvéolaire. Ce tissu est à maille adaptée mais son épaisseur est nécessairement très faible de l'ordre de 1 à 2 dixièmes de millimètre pour fixer un ordre de grandeur.

Dans le cas du choix d'un tissu d'amortissement acoustique métallique, on a recours à une toile en grillage inoxydable du type de celles commercialisées sous la marque GANTOIS.

De telles toiles présentent l'avantage d'être disponibles sur le marché et même avec des épaisseurs très faibles comme indiquées, la résistance mécanique reste importante par rapport à un tissu en matériau synthétique.

En effet, dans le cas des nacelles de réacteurs d'aéronefs, la surface de la couche résistive est immédiatement au contact des particules solides telles que des grains de sable et de petites pierres qui provoquent des phénomènes d'érosion ou encore des morceaux de glace ou des oiseaux éventuellement aspirés, qui, avec la vitesse, provoquent des dégradations mécaniques.

La toile métallique présente aussi l'avantage de très bien conduire la foudre balayante.

Un premier inconvénient reste son poids par rapport à des matières synthétiques, ce qui explique aussi son épaisseur très réduite afin de limiter les surpoids.

Un autre inconvénient important est la liaison entre cette toile et le matériau de renfort, qu'il s'agisse d'une plaque perforée en métal léger tel que de l'aluminium, d'un panneau composite moulé en forme ou de fils (c'est-à-dire bandes de fils, mèches, tresses ou brins de fils, quelle qu'en soit la section).

Cette liaison est très importante car dans le cas où la toile est disposée à l'extérieur, côté flux d'air circulant, il faut impérativement éviter tout délaminage de la toile par rapport à son support notamment dans le cas d'une amorce de rupture mécanique existante engendrée accidentellement par un corps étranger.

En effet, si le délaminage se produit, des morceaux de toile de plus grande surface peuvent s'arracher, ce qui serait inadmissible.

De plus, un autre problème est celui de lier la toile à son support tout en respectant les mailles car toute diminution du taux de trous ( taux de surface ouverte) contribue à diminuer les capacités d'amortissement acoustique de la couche résistive.

Dans le cas où le tissu d'amortissement acoustique est interposé entre la couche de renfort et la structure en nid d'abeilles comme le prévoit un agencement spécifique objet d'une demande de brevet parallèle au nom du même titulaire, le problème de liaison est également très important. Dans ce cas, il faut que la liaison entre la structure alvéolaire en nid d'abeilles et la couche de renfort s'opère de part et d'autre du tissu d'amortissement acoustique, voire, en partie à travers les mailles mais toujours sans obstruer ces mailles.

Les techniques utilisées dans l'art antérieur consistent à recourir à des résines thermodurcissables mais la maîtrise de cette famille de résines est difficile et de plus, la liaison présente une résistance inférieure à la résistance intrinsèque du tissu lui-même, c'est-à-dire des fils qui le composent, si bien que la zone de collage reste le point de fragilité de la couche résistive dans son ensemble.

L'objet de la présente invention est de proposer un procédé de fabrication d'une couche résistive comme exposé par la revendication 1 en vue de réaliser une liaison de ses constituants, dans différentes variantes d'agencement, qui donne satisfaction en présentant des capacités de solidarisation telles que, mécaniquement par exemple, la résistance de la liaison à l'interface des composantes structurales et acoustiques est supérieure à la résistance intrinsèque du tissu d'amortissement acoustique, formant ainsi un ensemble monolithique.

L'invention couvre aussi la couche résistive obtenue et les parois munies d'une telle couche résistive.

A cet effet, le procédé de réalisation d'une couche acoustiquement résistive selon la présente invention comprend les étapes suivantes :
- réaliser une composante structurale en utilisant des résines thermoplastiques, cette composante présentant un taux de surface ouverte donné en rapport avec les ondes acoustiques à traiter,
- rapporter un tissu acoustique métallique dont la maille est adaptée au taux de surface ouverte de la composante structurale, et
- assurer la polymérisation des résines thermoplastiques sous pression et à haute température.

La famille de résines retenue de façon préférentielle comprend les :
- PEI : polyétherimides,
- PEEK : polyétheréthercétones,
- PPS : polyphénilènesulfures,
- PA : polyamides, et
- PET : polyéthylènetéréphtalate.

Suivant les variantes, la couche résistive est obtenue par mise en forme sur un moule du tissu acoustique métallique et par dépose ou bobinage de fils imprégnés de résines thermoplastiques formant la composante structurale sur ce tissu, ou inversement, et par l'étape de polymérisation des résines thermoplastiques.

On peut aussi réaliser la couche résistive par mise en place sur un moule d'une tôle en matériau composite comprenant des résines thermoplastiques et par apport sur cette tôle du tissu acoustique métallique, ou inversement, ces étapes étant suivies de la polymérisation des résines thermoplastiques.

On utilise des fils d'origine minérale et/ou organique.

L'invention couvre la couche acoustiquement résistive obtenue par la mise en oeuvre des étapes du procédé et la paroi acoustiquement absorbante associée.

Le procédé de fabrication d'une couche résistive est maintenant décrit en détail dans le cas d'un ensemble de réalisations pratiques, ainsi que les couches résistives obtenues et les parois acoustiquement absorbantes réalisées en utilisant au moins une telle couche résistive.

Cette description est établie en regard des dessins annexés qui représentent :
- figure 1A, une vue d'un agencement montrant la mise en oeuvre d'un mode de réalisation du procédé de fabrication d'une couche résistive selon la présente invention,
- figure 1B, une vue en coupe de la couche résistive obtenue en figure 1A,
- figure 1C, une vue en perspective de cette même couche résistive utilisée en un élément unique dans la réalisation d'une paroi acoustiquement absorbante,
- figure 2A, une vue d'un agencement montrant la mise en oeuvre d'une variante de réalisation du procédé de fabrication d'une couche résistive selon la présente invention,
- figure 2B, une vue en coupe de la variante de couche résistive obtenue en figure 2A,
- figure 2C, une vue en perspective de cette même couche résistive utilisée dans la réalisation d'une paroi acoustiquement absorbante,
- figure 3, une variante de réalisation d'une paroi acoustiquement absorbante avec une plaque en matériau composite, le tissu métallique étant du côté de la surface aérodynamique, et
- figure 4, une variante de réalisation d'une paroi acoustiquement absorbante avec une plaque, le tissu métallique étant disposé entre la structure alvéolaire et la plaque.

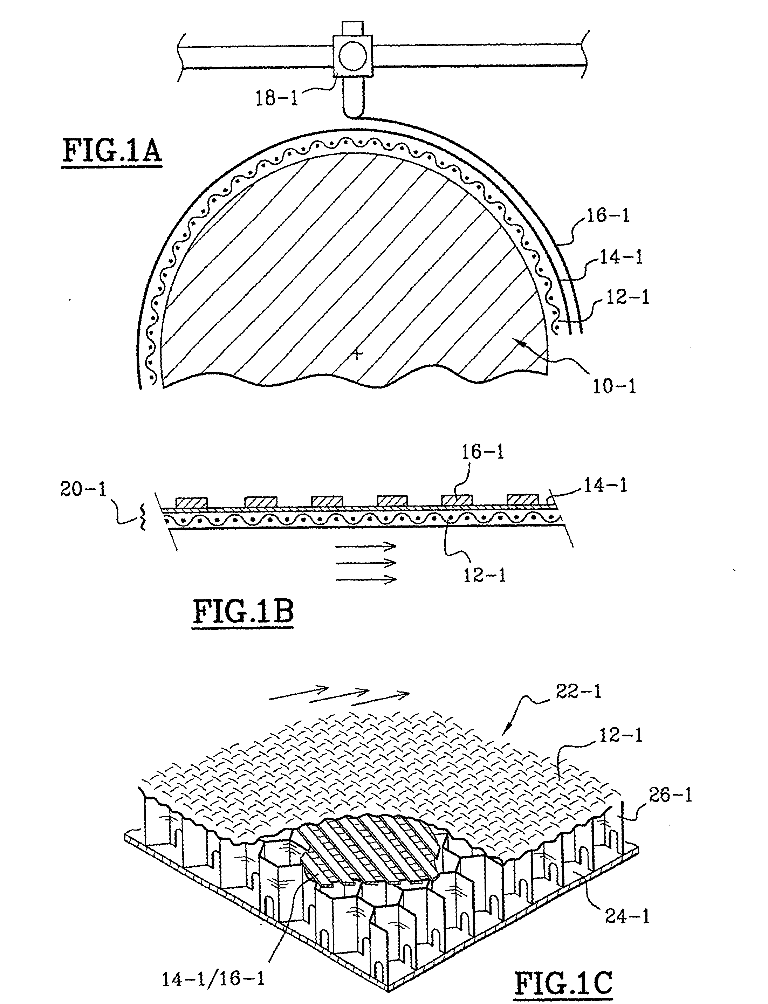

Dans le cas du mode d'élaboration d'une couche résistive selon la figure 1A, on utilise un outillage 10-1 dit moule ayant la forme de la pièce à obtenir, aux dimensions nécessaires pour permettre un usinage ultérieur de finition.

Sur l'outillage qui forme le moule, on dépose le tissu 12-1 acoustique métallique tissé à partir de fils d'acier inoxydable, par exemple du tissu métallique GANTOIS® en H5.30 dont l'épaisseur est de l'ordre de 0,1 à 0,2 millimètres avec une ouverture géométrique de 32 µm dans une application aux nacelles de réacteurs d'aéronefs.

Sur ce tissu 12-1, on dépose des fils imprégnés de résine, par exemple des fils de carbone, de verre ou de Kevlar®. Ces fils peuvent être des fils proprement dits, des mèches, des tresses ou des brins de fils, quelle qu'en soit la section. Les fils peuvent aussi être constitués de plusieurs milliers de filaments de fibres suivant les applications, 6 000, 12 000, 24 000.

Ces fils imprégnés sont disposés en une ou plusieurs couches et sont orientés suivant des directions différentes d'une couche à l'autre. Dans l'exemple retenu, il est prévu deux couches 14-1 et 16-1, croisées à 90°qui conduisent à la réalisation d'une épaisseur de 0,6 à 2 millimètres, ceci au moyen d'un dispositif 18-1 adapté.

L'ensemble est ensuite porté sous pression à une haute température avec un profil adapté de courbe de montée en température qui permet la fusion de la résine tout en ajustant la viscosité de celle-ci afin d'éviter le bouchage des mailles (par imprégnation) tout en assurant un bon mouillage des fils du tissu en acier inoxydable.

C'est là qu'intervient un choix de résines particulières qui donnent satisfaction.

En effet, la résine retenue est de la famille des thermoplastiques thermostables.

Cette famille comprend de préférence les :
- PEI : polyétherimides,
- PEEK : polyétheréthercétones,
- PPS : polyphénilènesulfures,
- PA : polyamides, et
- PET : polyéthylènetéréphtalate.

La couche résistive est ainsi réalisée avec des fibres de carbone liées entre elles par l'une de ces résines ou un mélange d'entre elles qui assurent aussi la liaison avec les fils en acier inoxydable du tissu, ne nécessitant aucun autre adhésif. La résistance mécanique obtenue est telle que les essais de traction conduisent à une rupture des fils eux-mêmes, préalablement à la désolidarisation de ces mêmes fils de la couche résistive ainsi fabriquée.

Le taux de surface ouverte de la composante structurale à partir de brins imprégnés est obtenue lors de la dépose des fils en respectant des espacement adaptés.

Le taux de surface ouverte de la structure tissée de fils en acier inoxydable doit permettre l'obtention d'un facteur de non linéarité requis.

Cet ensemble forme une couche résistive 20-1 en une pièce monolithique qui assure le transfert des efforts aérodynamiques, inertiels ainsi que ceux éventuellement liés à l'application envisagée. Dans le cas des nacelles de réacteurs, il faut aussi pouvoir recevoir et transférer les efforts liés à la maintenance vers les liaisons structurales nacelle/moteur.

La figure 1A permet de visualiser la superposition des éléments et l'absence de couche intermédiaire de collage.

On peut réaliser une paroi 22-1 acoustiquement absorbante à partir de cette couche 20-1 résistive.

Ainsi sur la figure 1C, on réalise une paroi acoustique comprenant un réflecteur total 24-1 arrière, rapporté de façon connue sur une structure 26-1 alvéolaire, avec des caractéristiques qui permettent de traiter les fréquences propres du bruit à atténuer.

Sur l'autre face de la structure alvéolaire, on rapporte la couche résistive.

En fabrication, il est possible soit de rapporter cette couche résistive sur la structure alvéolaire et de la lier au moyen d'une interface de colle particulière rapportée, soit de lier cette couche résistive sur la structure alvéolaire directement lors de la réalisation de la couche résistive.

En effet, les résines thermoplastiques utilisées peuvent, avec certains paramètres adaptés de conduite, permettre de réaliser la liaison des fils imprégnés sur les tranches des parois des cellules de la structure alvéolaire, généralement en matériau composite.

On obtient ainsi une paroi acoustique avec une couche résistive ayant de bonnes performances acoustiques, notamment en terme de non linéarité et dont l'impédance ne dépend pas du nombre de Mach de l'écoulement rasant.

L'adhésion des différentes interfaces est excellente entre la composante acoustique et la composante structurale et entre la composante structurale et la structure alvéolaire.

La conception et la réalisation de la composante structurale sont facilitées avec l'obtention de caractéristiques mécaniques performantes et homogènes.

Le fait de disposer d'un ensemble monolithique assimilable à une tôle au niveau de la couche résistive permet une réparation très facile, ce qui est un atout en maintenance pour les exploitants.

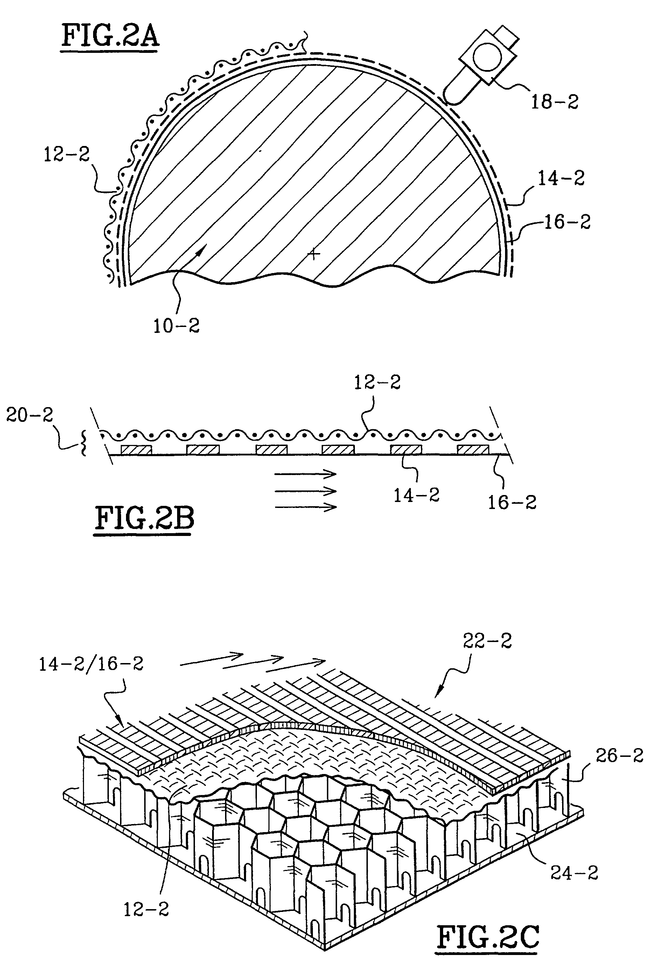

Dans le mode de réalisation de la figure 2A, on prévoit de disposer les différents éléments de la couche résistive de façon inversée.

Ainsi, sur le moule 10-2, dont la surface correspond au côté de l'écoulement, on réalise la composante structurale par dépose de fils imprégnés en deux ou plusieurs phases avec des orientations différentes d'une couche à l'autre comme précédemment. En l'occurrence, on réalise deux couches 14-2 et 16-2. Les précautions de type connu sont prises pour éviter l'adhésion sur le moule.

Sur cette composante structurale, on rapporte le tissu acoustiquement résistif, en l'occurrence la toile métallique et en particulier la toile en fils d'acier inoxydable.

On assure les étapes de polymérisation et on obtient une couche résistive avec une inversion de l'agencement des couches par rapport au mode précédent.

Dans ce cas, un atout supplémentaire est celui d'assurer la protection du tissu métallique de très faible épaisseur par une couche de matériau composite plus épais, moins fragile aux chocs de corps étrangers.

La vue en coupe de la figure 2B montre cet agencement.

Le tissu acoustique peut aussi être disposé entre deux couches de matériau de renfort telles que 14 et 16.

En ce qui concerne la réalisation d'une paroi acoustique 22-2, il faut prévoir la liaison de cette couche 20-2 acoustiquement résistive avec les autres éléments.

Dans ce cas, on peut aussi utiliser les deux modes de fabrication.

Dans le premier cas, la couche résistive est fabriquée indépendamment et elle est rapportée sur les tranches des cellules de la structure 26-2 alvéolaire. Il faut alors interposer une couche de résine entre le tissu métallique et lesdites tranches et en assurer la polymérisation. Cette résine est choisie de préférence dans la même famille des thermoplastiques citées ci-avant comprenant les PEI, PEEK, PPS, PA et PET.

On obtient alors les mêmes résultats de très forte adhérence du tissu métallique sur le matériau composite dans lequel est fabriquée la structure alvéolaire.

L'autre solution est de rapporter l'ensemble structure alvéolaire 26-2 et réflecteur 24-2 directement sur le tissu métallique avant polymérisation, sur le moule.

Dans ce cas, par dosage et répartition adaptés de la résine et avec un profil particulier de températures et de durées de polymérisation, on provoque la liaison entre la toile métallique et la structure alvéolaire, voire également une liaison directement entre les fils de la composante structurale et les tranches des parois des cellules, ce qui conduit à une paroi présentant de très fortes caractéristiques mécaniques.

Ce qui a été indiqué dans le cas d'une dépose de fils imprégnés peut aussi être aussi réalisé par bobinage de fils, c'est à dire par une dépose sous tension.

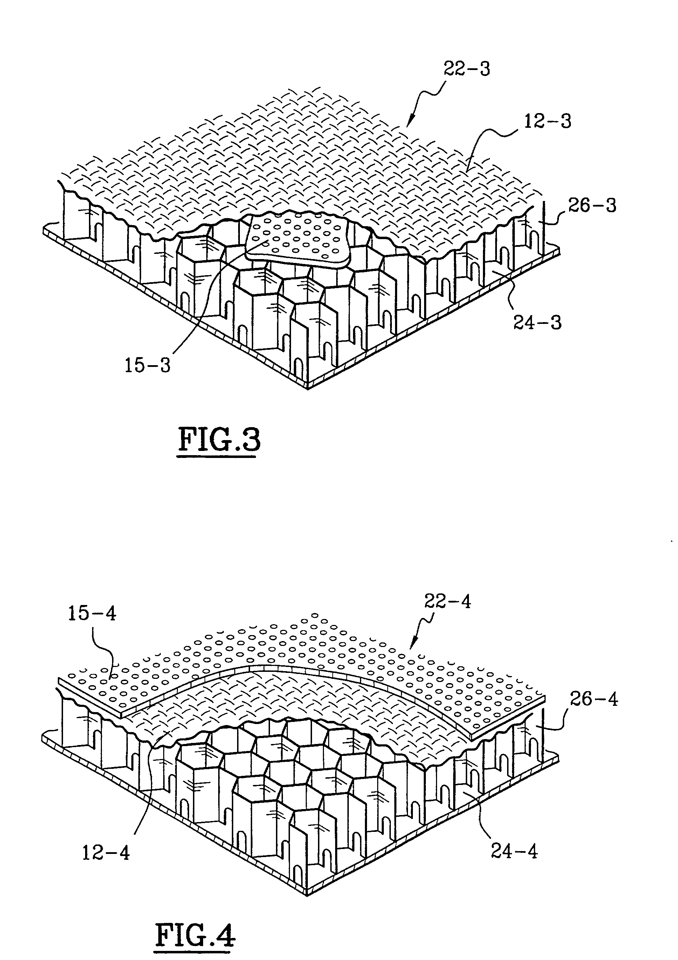

Dans le cas des figures 3 et 4, on a réalisé des variantes d'agencements qui reprennent l'ensemble des caractéristiques précédentes mais qui utilisent une composante structurale différente pour la couche résistive.

En effet, cette composante structurale peut être obtenue à partir d'une tôle 15 en matériau composite préformée et perforée de microperforations, déjà réalisée par ailleurs. Cette tôle comprend des résines thermoplastiques et le procédé reste identique.

Dans le cas de l'option tissu 12-3 métallique côté veine d'air, on dispose le tissu sur un moule, on dispose la tôle 15-3 sur ce tissu et on polymérise sous pression à haute température les résines thermoplastiques qui assurent la liaison mécanique. Ces résines thermoplastiques sont choisies de préférence parmi celles de la famille des PEI, PEEK, PPS, PA et PET.

Dans la cas de l'option composante structurale côté veine d'air, on dispose la tôle 15-4 sur le moule, on rapporte le tissu 12-4 métallique en fils d'acier inoxydable sur cette tôle et on polymérise sous pression à haute température les résines thermoplastiques qui assurent la liaison mécanique. Ces résines thermoplastiques sont choisies de préférence parmi celles de la famille des PEI, PEEK, PPS, PA et PET.

On peut ensuite fabriquer des parois acoustiquement absorbantes utilisant une telle couche résistive de la même façon que précédemment en la rapportant sur une structure 26-3, 26-4 alvéolaire elle-même munie d'un fond 24-3, 24-4 réflecteur. Le résultat est montré sur les figures 3 et 4.

Les exemples donnés comprennent pour simplifier la description un fond réflecteur avec une seule structure alvéolaire et une couche acoustiquement résistive mais toute combinaison qui utiliserait des agencements de plusieurs de ces éléments obtenus par le procédé de la présente invention en font partie intégrante.

## Revendications

1. Procédé de réalisation d'une couche acoustiquement résistive notamment pour des nacelles de réacteurs d'aéronefs comprenant les étapes suivantes :
- réaliser une composante structurale en utilisant des résines, cette composante présentant un taux de surface ouverte donné en rapport avec les ondes acoustiques à traiter,
- rapporter un tissu acoustique métallique de faible épaisseur dont la maille est adaptée au taux de surface ouverte de la composante structurale,
**caractérisé en ce que** les résines sont des résines thermoplastiques, et **en ce que** le procédé comprend une étape de polymérisation des résines thermoplastiques sous pression et à haute température avec un profil de courbe de montée en température tout en ajustant la viscosité de la résine adapté en sorte de conserver les mailles libres.

2. Procédé de réalisation d'une couche acoustiquement résistive selon la revendication 1, **caractérisé en ce que** les résines thermoplastiques sont choisies parmi les :
- PEI : polyétherimides,
- PEEK : polyétheréthercétones,
- PPS : polyphénilènesulfures,
- PA : polyamides, et
- PET : polyéthylènetéréphtalate.

3. Procédé de réalisation d'une couche acoustiquement résistive selon la revendication 1 ou 2, **caractérisé en ce que** la couche (20) résistive est obtenue par mise en forme sur un moule (10) du tissu (12) acoustique métallique et par dépose ou bobinage de fils (14, 16) imprégnés de résines thermoplastiques formant la composante structurale sur ce tissu et par l'étape de polymérisation des résines thermoplastiques.

4. Procédé de réalisation d'une couche acoustiquement résistive selon la revendication 1 ou 2, **caractérisé en ce que** la couche (20) résistive est obtenue par dépose ou bobinage de fils (14, 16) imprégnés de résines thermoplastiques formant la composante structurale sur un moule (10) puis par dépose du tissu (12) acoustique métallique sur ces fils, ces étapes étant suivies de la polymérisation des résines thermoplastiques.

5. Procédé de réalisation d'une couche acoustiquement résistive selon la revendication 1 ou 2, **caractérisé en ce que** la couche (20) résistive est obtenue par mise en place sur un moule (10) d'une tôle (15) perforée en matériau composite comprenant des résines thermoplastiques et par apport sur cette tôle du tissu (12) acoustique métallique, ces étapes étant suivies de la polymérisation des résines thermoplastiques.

6. Procédé de réalisation d'une couche acoustiquement résistive selon la revendication 1 ou 2, **caractérisé en ce que** la couche (20) résistive est obtenue par mise en place sur un moule (10) du tissu (12) acoustique métallique et par apport sur ce tissu d'une tôle (15) perforée en matériau composite comprenant des résines thermoplastiques, ces étapes étant suivie de la polymérisation des résines thermoplastiques.

7. Procédé de réalisation d'une couche acoustiquement résistive selon l'une quelconque des revendications précédentes, **caractérisé en ce que** l'on utilise des fils d'origine minérale et/ou organique.

8. Procédé selon l'une des revendications précédentes **caractérisé en ce que** le profil de courbe de montée en température permet une fusion de la résine tout en ajustant la viscosité de celle-ci pour assurer un mouillage des fils du tissu acoustique et un collage de la composante structurale et du tissu acoustique.

## Patentansprüche

1. Verfahren zur Erzeugung eines Schalldämmbelags, insbesondere für die Gondeln von Flugzeug-Strahltriebwerken, das die folgenden Schritte umfaßt:
- Herstellen einer Strukturkomponente unter Verwendung von Harzen, die einen gegebenen Anteil von offener Oberfläche für die zu verarbeitenden Schallwellen aufweist, und
- Aufbringen eines metallischen akustischen Gewebes mit geringer Dicke, dessen Maschenweite an den Anteil von offener Oberfläche der Strukturkomponente angepaßt ist,
**dadurch gekennzeichnet, daß** die Harze thermoplastische Harze sind und daß das Verfahren einen Schritt des Polymerisierens der thermoplastischen Harze unter Druck und bei hoher Temperatur mit einem Temperaturanstiegs-Kurvenprofil unter geeigneter Einstellung der Viskosität des Harzes in der Weise, daß die Maschen frei gehalten werden, umfaßt.

2. Verfahren zur Erzeugung eines Schalldämmbelags nach Anspruch 1, **dadurch gekennzeichnet, daß** die thermoplastischen Harze ausgewählt sind aus:
- PEI: Polyetherimiden
- PEEK: Polyetheretherketonen
- PPS: Polyphenylensulfiden,
- PA: Polyamiden und
- PET: Polyethylenterephthalat.

3. Verfahren zur Erzeugung eines Schalldämmbelags nach Anspruch 1 oder 2, **dadurch gekennzeichnet, daß** der Dämmbelag (20) durch Formen auf einer Form (10) des metallischen akustischen Gewebes (12) und durch Ablagern oder Wickeln von mit thermoplastischen Harzen imprägnierten Fäden (14, 16), die die Strukturkomponente auf diesem Gewebe bilden, und durch den Schritt des Polymerisierens der thermoplastischen Harze erhalten wird.

4. Verfahren zur Erzeugung eines Schalldämmbelags nach Anspruch 1 oder 2, **dadurch gekennzeichnet, daß** die Dämmbelag (20) durch Ablagern oder Wickeln von mit thermoplastischen Harzen imprägnierten Fäden (14, 16), die die Strukturkomponente bilden, auf einer Form (10) und dann durch Ablagern des metallischen akustischen Gewebes (12) auf diesen Fäden erhalten wird, wobei diesen Schritten die Polymerisation der thermoplastischen Harze folgt.

5. Verfahren zur Erzeugung eines Schalldämmbelags nach Anspruch 1 oder 2, **dadurch gekennzeichnet, daß** der Dämmbelag (20) durch Anordnen eines Lochblechs (15) aus Verbundmaterial, das thermoplastische Harze enthält, auf einer Form (10) und durch Anbringen von metallischem akustischen Gewebe (12) auf diesem Blech erhalten wird, wobei diesen Schritten die Polymerisation der thermoplastischen Harze folgt.

6. Verfahren zur Erzeugung eines Schalldämmbelags nach Anspruch 1 oder 2, **dadurch gekennzeichnet, daß** der Dämmbelag (20) durch Anordnen des metallischen akustischen Gewebes (12) auf einer Form (10) und durch Anbringen eines Lochblechs (15) aus Verbundmaterial, das thermoplastische Harze enthält, auf diesem Gewebe erhalten wird, wobei diesen Schritten die Polymerisation der thermoplastischen Harze folgt.

7. Verfahren zur Erzeugung eines Schalldämmbelags nach einem der vorhergehenden Ansprüche, **dadurch gekennzeichnet, daß** Fäden mit mineralischem und/oder organischem Ursprung verwendet werden.

8. Verfahren nach einem der vorhergehenden Ansprüchen, **dadurch gekennzeichnet, daß** das Temperaturanstiegs-Kurvenprofil ein Schmelzen des Harzes unter Einstellung seiner Viskosität ermöglicht, um eine Benetzung der Fäden des akustischen Gewebes und ein Verkleben der Strukturkomponente und des akustischen Gewebes sicherzustellen.

## Claims

1. A method of producing an acoustically resistive layer, in particular for aircraft jet engine carriage, including the following steps:
- producing a structural component using resins, this component having a given open surface ratio in relation to the sound waves to be treated,
- attaching a thin metallic acoustic fabric whose mesh is adapted to the open surface ratio of the structural component,
**characterised in that** the resins are thermoplastic resins, and **in that** the method comprises a step of polymerising the thermoplastic resins under pressure and at high temperature with a temperature rise curve profile whilst adjusting the viscosity of the resin adapted so as to preserve the free meshes.

2. A method of producing an acoustically resistive layer according to claim 1, **characterised in that** the thermoplastic resins are chosen from:
- PEI: polyether imides,
- PEEK: polyether ether ketones,
- PPS: polyphenylene sulphides,
- PA: polyamides, and
- PET: polyethylene terephthalate.

3. A method of producing an acoustically resistive layer according to claim 1 or 2, **characterised in that** the resistive layer (20) is obtained by forming metallic acoustic fabric (12) on a mould (10) and by depositing or winding threads (14, 16) impregnated with thermoplastic resins forming the structural component of the fabric and by the step of polymerising the thermoplastic resins.

4. A method of producing an acoustically resistive layer according to claim 1 or 2, **characterised in that** the resistive layer (20) is obtained by depositing or winding threads (14, 16) impregnated with thermoplastic resins forming the structural component on a mould (10) and then by depositing the metallic acoustic fabric (12) on these threads, these steps being followed by the polymerisation of the thermoplastic resins.

5. A method of producing an acoustically resistive layer according to claim 1 or 2, **characterised in that** the resistive layer (20) is obtained by placing on a mould (10) a perforated sheet (15) made from composite material comprising thermoplastic resins and by adding metallic acoustic fabric (12) to the sheet, said steps being followed by the polymerisation of the thermoplastic resins.

6. A method of producing an acoustically resistive layer according to claim 1 or 2, **characterised in that** the resistive layer (20) is obtained by placing a metallic acoustic fabric (12) on a mould (10) and by adding to this fabric a perforated sheet (15) made from composite material comprising thermoplastic resins, said steps being followed by the polymerisation of the thermoplastic resins.

7. A method of producing an acoustically resistive layer according to any one of the preceding claims, **characterised in that** threads of mineral and/or organic origin are used.

8. A method according to one of the preceding claims, **characterised in that** the temperature rise curve profile allows fusion of the resin whilst adjusting the viscosity thereof in order to ensure wetting of the threads of the acoustic fabric and adhesive bonding of the structural component and the acoustic fabric.
